# FASCICULE DE BREVET EUROPEEN

(11) **EP 3 929 052 B1**
(45) Date de publication et mention de la délivrance du brevet: **06.09.2023**
(21) Numéro de dépôt: 21180731.8
(22) Date de dépôt: 22.06.2021
(51) Int. Cl.: B61C 3/02, B61C 17/06, B61D 15/00, B60L 50/75, B60L 58/40

(54) **BLOC DE CONTRÔLE D'UN DISPOSITIF D'ALIMENTATION HYBRIDE POUR ALIMENTER UN ENGIN DE TRACTION, SYSTÈME D'ALIMENTATION HYBRIDE ET PROCÉDÉ ASSOCIÉ**
STEUERGERÄT EINER HYBRIDEN STROMVERSORGUNGSVORRICHTUNG ZUR STROMEINSPEISUNG IN EINE ZUGMASCHINE, HYBRIDES STROMVERSORGUNGSSYSTEM UND ENTSPRECHENDES VERFAHREN
CONTROL UNIT FOR A HYBRID POWER DEVICE FOR SUPPLYING A TRACTION ENGINE, HYBRID POWER SUPPLY SYSTEM AND ASSOCIATED METHOD

(30) Priorité: 22.06.2020 FR 2006496
(43) Date de publication de la demande: 29.12.2021
(73) Titulaire: ALSTOM Transport Technologies, 93400 Saint-Ouen-sur-Seine (FR)
(72) Inventeur: ROUILLE, Bruno, 65200 ORDIZAN (FR); HIBON, Samuel, 72000 LE MANS (FR)
(74) Mandataire: Lavoix

(56) Documents cités:
- EP-A1- 3 293 072
- EP-A2- 2 423 066
- WO-A1-03/033292
- DE-A1-102010 048 580

## Description

La présente invention concerne l'alimentation des engins de traction, par exemple une locomotive.

On connait du document EP 2 423 066 A2 un bloc de contrôle d'un dispositif hybride propre à alimenter un engin de traction.

Dans le cas d'une locomotive, par exemple en absence de caténaire, ou en cas de caténaire défectueuse, l'alimentation de la locomotive devient problématique.

Par ailleurs, l'engin de traction peut provenir de divers constructeurs et être de différentes natures. Il est toutefois souhaitable de pouvoir utiliser de mêmes dispositifs de production hybride d'énergie pour plusieurs natures et plusieurs constructeurs d'engins de traction.

A cet effet, suivant un premier aspect, l'invention propose un bloc électronique de contrôle selon la revendication 1.

L'invention permet ainsi l'alimentation d'un engin de traction, sans nécessiter d'infrastructure fixe, à partir d'un dispositif d'alimentation hybride et en régulant les appels de puissance.

L'invention permet l'alimentation d'un engin de traction par le système de production hybride d'énergie sans mettre en oeuvre de communication entre l'engin de traction et le système d'alimentation et sans réaliser de modification logicielle au niveau de l'engin de traction, via la boucle de régulation de puissance proposée. L'invention permet une solution d'alimentation avec une grande souplesse et compatibilité d'emploi avec le plus grand nombre d'engins de traction. L'invention permet d'adapter progressivement de façon autonome et dans le respect du temps de montée en fonctionnement nominal du système d'alimentation, la puissance délivrée en fonction des besoins de l'engin de traction.
- Dans des modes de réalisation, un bloc de contrôle est selon la revendication 2 ou 3.

Suivant un deuxième aspect, la présente invention propose un système d'alimentation hybride selon la revendication 4.

Dans un mode de réalisation le système d'alimentation est selon la revendication 5.

Suivant un troisième aspect, la présente invention propose un procédé de contrôle selon la revendication 6.

Dans des modes de réalisation, le procédé suivant l'invention est selon l'une quelconque des revendications 7 à 9.

Suivant un quatrième aspect, la présente invention propose un programme d'ordinateur selon la revendication 10.

Ces caractéristiques et avantages de l'invention apparaîtront à la lecture de la description qui va suivre, donnée uniquement à titre d'exemple, et faite en référence aux dessins annexés, sur lesquels :
[Fig 1] la figure 1 représente une vue schématique d'une locomotive tirant un tender transportant un système d'alimentation hybride alimentant la locomotive, dans un mode de réalisation de l'invention ;
[Fig 2] la figure 2 représente un contrôleur d'un dispositif d'alimentation hybride dans un mode de réalisation de l'invention ;
[Fig 3] la figure 3 est un gabarit normatif (EN 50388) fixant la puissance maximale consommable par une locomotive en fonction de la tension d'alimentation sur le câble d'alimentation entre la locomotive et le système d'alimentation hybride ;
[Fig 4] la figure 4 est un organigramme d'étapes mises en oeuvre dans un mode de réalisation de l'invention.

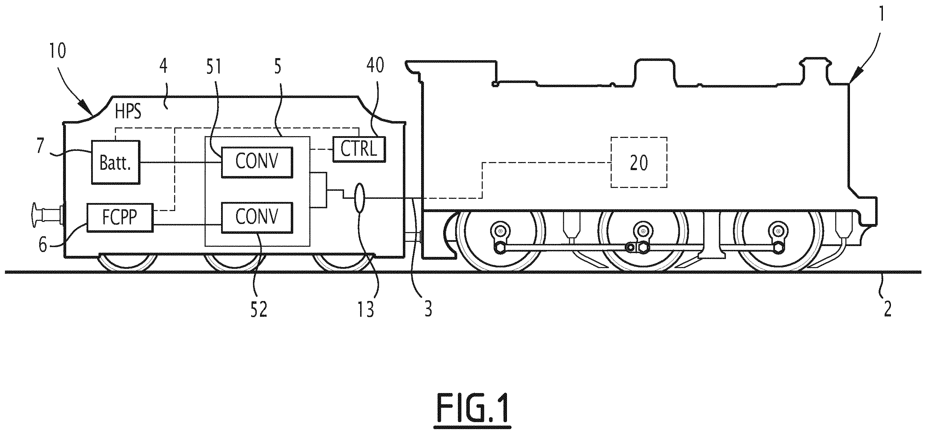

La figure 1 est une vue schématique d'une locomotive 1 tirant un tender 10 dans un mode de réalisation de l'invention. La locomotive 1 et le tender 10 roulent sur une voie ferrée 2, de façon solidaire.

Le tender 10 transporte un système d'alimentation hybride 4 adapté pour alimenter la locomotive via un câble d'alimentation 3 lors de son déplacement.

Le câble d'alimentation 3 reliant la sortie du système d'alimentation hybride et la locomotive 1 est adapté pour convoyer l'énergie électrique haute tension fournie par le système d'alimentation 4 jusqu'à la locomotive 1. Cette énergie électrique est utilisée ensuite par la locomotive par un ensemble d'équipements électriques 20 : le moteur de traction, les équipements auxiliaires ... Le câble d'alimentation 3 peut être vu comme une caténaire virtuelle.

Dans le cas considéré, le système d'alimentation hybride 4 comporte un contrôleur 40, un ensemble de convertisseurs 5, une source primaire d'énergie 6 et un bloc de stockage d'énergie 7. L'ensemble formé par l'ensemble de convertisseurs 5, la source primaire et le bloc de stockage forme un dispositif d'alimentation hybride propre à être contrôlé par le contrôleur 40.

La source primaire d'énergie 6 comporte par exemple un ensemble de pile(s) à combustible.

Le bloc de stockage d'énergie 7 comporte par exemple dans le cas présent un ensemble de batterie(s).

L'ensemble de convertisseurs 5 comporte un hacheur élévateur DC/DC 51 disposé entre la batterie 7 et le câble d'alimentation 3 et adapté pour réguler la tension appliquée sur le câble d'alimentation 3 en sortie du système d'alimentation de manière à l'égaliser avec la valeur d'une tension de consigne commandée par le contrôleur 40, comme indiqué plus bas.

L'ensemble de convertisseurs 5 comporte un hacheur élévateur DC/DC 52 disposé entre la pile à combustible 6 et le câble d'alimentation 3. Le hacheur élévateur DC/DC 52 est adapté pour adapter la tension de la pile à combustible à la tension de consigne à appliquer sur le câble d'alimentation.

D'autres architectures internes au tender peuvent être utilisées à la place de (ou en complément de) cet ensemble de convertisseurs 5 avec par exemple, un premier élévateur DC/DC qui adapte la tension de la pile à combustible à la tension du système de stockage d'énergie puis un second élévateur DC/DC qui fait l'adaptation à la tension appliquée au câble d'alimentation.

Le système d'alimentation hybride 4 comporte par ailleurs un capteur de courant 13 adapté pour mesurer le courant circulant sur le câble d'alimentation 3.

Le contrôleur 40 est adapté pour déterminer à chaque instant la puissance demandée par la locomotive 1, en fonction des mesures de courant fournies par le capteur de courant 13, et de la tension appliquée sur le câble 3 par le système d'alimentation 4.

Le contrôleur 40 est par exemple adapté pour déterminer qu'un rechargement de la batterie 7 est nécessaire et pour commander le rechargement de ladite batterie par la pile à combustible 6.

Lors d'une importante augmentation d'appel de puissance par la locomotive 1 (par exemple en réponse à une commande du conducteur ou à forte vitesse), la pile à combustible 6 n'est pas capable de fournir immédiatement la puissance requise, de par son inertie propre d'une part (dP/dt bornés) et/ou d'autre part, du fait d'un fonctionnement par paliers de puissance successifs contraints dans le temps et gérés par une commande de type hystérésis.

Le contrôleur 40 est adapté pour tant que la pile à combustible 6 n'est pas en mesure de fournir la puissance requise, faire livrer le complément par la batterie 7, dans le respect du bon fonctionnement de la batterie.

Le contrôleur 40 comporte une base de données 43.

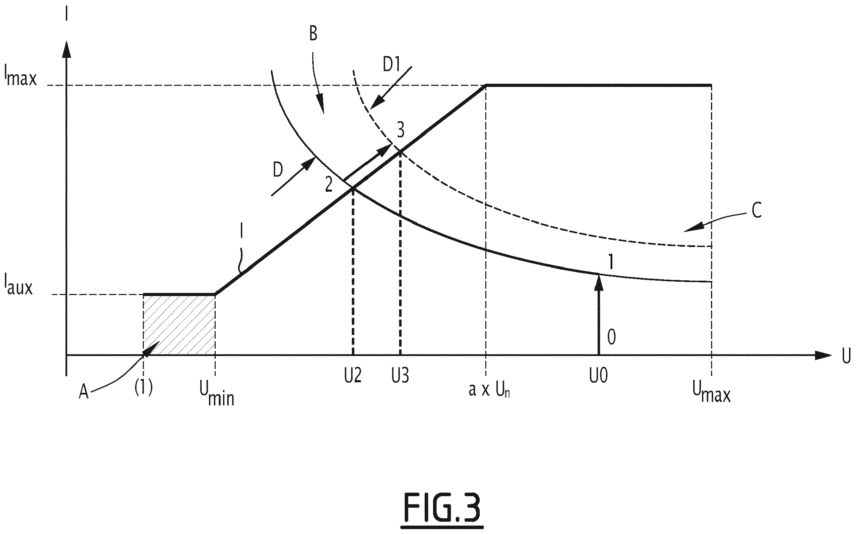

La base de données 43 stocke les données de définition d'un gabarit représenté en figure 3.

Ce gabarit traduit par exemple les prérogatives connus de la norme EN50388 (ou des prérogatives similaires) fixant les critères techniques pour la coordination entre le système d'alimentation (sous-station fixes) et le matériel roulant : en abscisse figurent les valeurs de tension sur la caténaire reliant les sous-stations au pantographe d'un train, en ordonnée figurent les valeurs maximum de courant que le train peut consommer ; ce gabarit contraint ainsi la puissance maximale que la locomotive peut appeler depuis la caténaire, en fonction de la tension présente sur la caténaire.

Dans le cas de l'invention, il est considéré la tension présente sur la câble d'alimentation 3 à la place de la tension sur la caténaire.

Les portions successives de droites constituant la courbe I représentée sur la figure 3 délimitent ainsi deux régions : la région B où les valeurs de courant excèdent ce qui est autorisé pour chaque valeur de tension considérée, la région C correspondant aux valeurs de courant autorisées pour chaque valeur de tension considérée.
laux représente la valeur de courant nécessaire aux seuls équipements auxiliaires du train, sans traction (la zone zébrée A correspond à l'absence de traction) ; Imax représente la valeur de courant maximum nécessaire à l'ensemble des équipements du train, tant les équipements auxiliaires que les équipements de traction du train.

Umin, respectivement Umax, représente une valeur de tension minimale, respectivement maximale, dépendant du type de tension caténaire. Ces valeurs sont définies dans la norme EN 50163.

La locomotive 1 est ainsi adaptée pour en fonction de la tension U présente sur le câble d'alimentation 3, limiter le courant qu'elle consomme (et donc la puissance consommée) pour qu'il ait une valeur inférieure ou égale à la valeur de la courbe I donnée pour ladite tension, i.e une valeur de courant présente dans la zone C et à la verticale de la tension U présente sur le câble d'alimentation 3.

La présente invention tire parti de ce gabarit et de ce fonctionnement de la locomotive 1, en régulant la demande de puissance de la locomotive par l'intermédiaire de la tension appliquée sur le câble d'alimentation tant que le système d'alimentation 4 n'est pas en mesure de fournir la puissance requise.

Un = Umax est égale par exemple à 1500 V ou 3000 V, dans des modes de réalisation.

Dans le cas où Un égale à 1500 V, a x Un est par exemple égale à 1350 V.

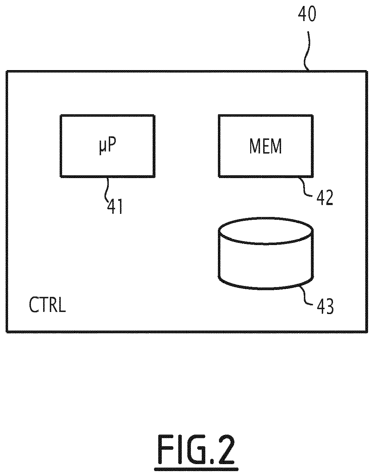

Dans un mode de réalisation, le contrôleur 40 comprend, en référence à la figure 2, outre la base de données 43 un processeur 41 et une mémoire 42.

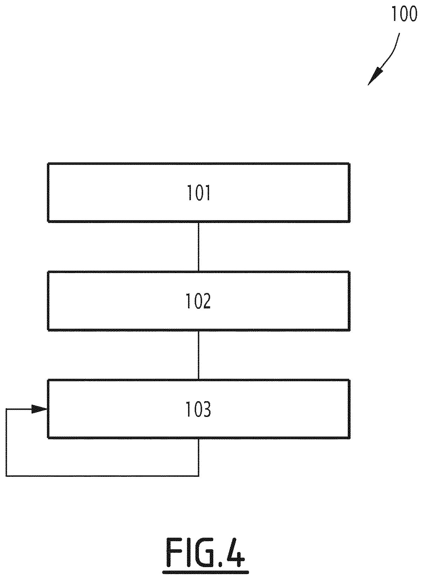

La mémoire 42 comprend des instructions logicielles, qui lorsqu'elles sont exécutées sur le processeur 41, mettent en oeuvre automatiquement les étapes incombant au contrôleur 40 décrites en référence à la figure 4.

Dans une étape 101, le câble d'alimentation 3 se trouvant par exemple à la tension nominale 1500 V telle qu'appliquée alors par le système d'alimentation hybride 4, la locomotive 1 tractant le tender 10 et éventuellement d'autres voitures ferroviaires, effectue un appel de puissance électrique sur le câble d'alimentation 3, par exemple lors d'une reprise de traction à partir de la marche sur l'erre à une vitesse élevée.

Le contrôleur 40 détermine, toutes les T secondes (par exemple T est dans la plage de valeurs [0,1 s ; 1 s ], la puissance courante, nommée Papp, appelée par la locomotive 1 sur le câble d'alimentation 3, ainsi que la capacité courante de puissance livrable Pfc par la pile à combustible 6 et la capacité courante de puissance livrable Pbatt par la batterie 7.

Dans une étape 102, le contrôleur 40 compare la somme, Pfc + Pbatt, desdites puissances délivrables à ladite puissance requise Papp.

Si ladite somme est supérieure à la puissance requise, le contrôleur 40 commande au dispositif d'alimentation hybride la fourniture de la puissance requise, selon une distribution entre la batterie 7 et la pile 6 fonction d'un certain nombre de critères (capacités respectives, état de charge de la batterie etc.) ; cette distribution étant par exemple définie par un logiciel s'exécutant sur le contrôleur 40 et prenant en compte lesdits critères.

Si ladite somme est inférieure à ladite puissance requise Papp, le contrôleur 40 détermine, en fonction du gabarit stocké dans la base de données 43 et représenté en figure 3, la valeur de tension indiquée par la courbe l correspondant à une valeur de puissance maximale appelable égale à Pfc + Pbatt, et le contrôleur 40 commande alors au dispositif d'alimentation hybride 4 l'application de ladite valeur de tension (ou d'une valeur inférieure) sur le câble d'alimentation 3, commande la fourniture de la puissance Pfc par la pile 6 et commande la fourniture de la puissance Pbatt par la batterie 7.

Dans le cas où la somme était inférieure à la puissance requise, dans une étape ultérieure 103, réitérée au fur et à mesure que la puissance délivrable par le dispositif d'alimentation hybride 4 augmente, le contrôleur 40 détermine ladite somme de puissance délivrable actualisée, détermine, en fonction du gabarit stocké dans la base 43, la valeur augmentée de tension correspondant à la puissance maximum appelable actualisée et commande l'application de la valeur augmentée de tension (ou d'une valeur inférieure) sur ledit câble d'alimentation par ledit dispositif d'alimentation hybride ainsi que la fourniture par ce dernier de la puissance délivrable actualisée.

Par exemple, dans un mode de réalisation, le scénario suivant a lieu, en référence à la figure 3.

Tout d'abord, le fonctionnement de la locomotive correspond au point 0 : la locomotive 1 est au neutre, le câble d'alimentation 3 est porté par le dispositif d'alimentation hybride à la tension U0. Puis le conducteur de la locomotive 1 pousse le manipulateur de traction, le système d'alimentation 4 et notamment le dispositif d'alimentation, sous le pilotage du contrôleur 40 délivre la puissance maximum délivrable à ce moment considéré (point 1, à la tension U0 sur la courbe D, courbe isopuissance qui représente pour une même valeur de puissance délivrée par le système d'alimentation hybride 4, le lien entre les valeurs de tension appliquées sur le câble 3 et les valeurs de courant correspondant délivrables sur le câble 3 . Le contrôleur 40 commande alors la diminution de la tension appliquée sur le câble 3 par le dispositif d'alimentation 3 jusqu'au point 2, ce qui bride la puissance appelée par la locomotive par le gabarit tension puissance qu'elle doit respecter (respect de la norme EN 50388), en cheminant le long de la courbe isopuissance D, correspondant à la tension U2.

La puissance délivrable par le dispositif d'alimentation augmente alors : on est à présent sur la courbe isopuissance D1 de fonctionnement U/I du dispositif d'alimentation hybride 4, correspondant à la puissance délivrable actualisée : le contrôleur commande alors que la valeur de tension U3 soit appliquée par le dispositif d'alimentation sur le câble 3 (point 3).

L'invention permet ainsi de contraindre l'appel de puissance d'une locomotive en fonction de la tension sur le câble 3, cette régulation permet d'adapter la demande de puissance à la capacité courante de puissance du dispositif d'alimentation pendant un régime transitoire de montée en puissance, et ce de manière automatique, sans nécessiter de communications entre avec la locomotive et le système d'alimentation hybride, seul l'appel de courant et la gestion de la tension permettent le bon fonctionnement.

L'invention évite en outre que la batterie ne soit sollicitée au-delà de ce qu'elle peut fournir tant que la pile à combustible n'est pas montée en puissance (limite donc une sur-sollicitation de la batterie pouvant se traduire par l'ouverture des contacteurs de la batterie lorsqu'elle se met en protection).

Un autre scénario de mise en oeuvre de l'invention est décrit maintenant.

Suite à l'appel de puissance de la locomotive, la batterie 7 qui peut répondre instantanément aux besoin de puissance va fournir sa puissance maximum (toutefois limitée par ses capacités), puis il va être commandé à la pile 6 de fournir la puissance maximum (par exemple 900kW), et la pile 6 avec ses temps de réponse va positionner ses actionneurs (compresseur d'air, alimentation en H2) pour fournir cette puissance. Il est détecté une surpuissance appelée par la locomotive, en mesurant la puissance que fournit la batterie 7 ; lorsque celle-ci atteint ses limites ( valeur maximum que peut fournir la batterie avec ses capacités) alors la tension de sortie du hacheur DC/DC 51 va être diminuée afin que la tension appliquée au câble 3 fasse baisser la consommation tirée par la locomotive, puisque, dans le logiciel de la locomotive , si la tension d'alimentation baisse, alors la locomotive doit tirer une puissance plus faible (respect du gabarit de la norme EN50388). Un point d'équilibre va être trouvé lorsque la tension du câble d'alimentation 3 entrainera une puissance tirée par la locomotive identique à celle que sait fournit le tender.

Dans un autre mode de réalisation, le contrôleur 40 est réalisé sous forme d'un composant logique programmable, tel qu'un FPGA (de l'anglais *Field Programmable Gate Array*), ou encore sous forme d'un circuit intégré dédié, tel qu'un ASIC (de l'anglais *Applications Spécifie Integrated Circuit*)*.*

La description a été faite ci-dessus en référence à une locomotive, mais l'invention peut s'appliquer à tout type d'engin de traction, par exemple un tramway, un bus, un camion, un bateau.

La description a été faite ci-dessus en référence à une source primaire de type pile(s) à combustible et un bloc de stockage d'énergie de type batterie(s). Selon les modes de réalisation la source primaire d'énergie comprend une ou des sources de type pile à combustible et/ou groupe électrogène ; et/ou le bloc de stockage d'énergie comprend au moins un ou plusieurs blocs de type batterie(s) et/ou au moins supercondensateur(s) et/ou volant(s) d'inertie.

## Revendications

1. Bloc électronique de contrôle (40) d'un dispositif d'alimentation hybride (6, 7, 13) propre à alimenter un engin de traction, le dispositif d'alimentation hybride comportant une source primaire d'énergie (6) et un bloc de stockage d'énergie (7) et étant adapté pour être transporté par une plate-forme mobile (10) se déplaçant de façon solidaire avec ledit engin de traction (1) et pour alimenter ledit engin de traction pendant ledit déplacement via un câble d'alimentation (3) reliant ledit dispositif d'alimentation et ledit engin de traction,
ledit bloc électronique de contrôle étant adapté pour, en fonction d'un appel de puissance dudit engin de traction sur ledit câble d'alimentation, déterminer la puissance requise par ledit engin de traction à l'instant courant ;
ledit bloc électronique de contrôle étant adapté pour déterminer la puissance délivrable à l'instant courant par la source primaire d'énergie et par le bloc de stockage d'énergie, pour comparer la puissance délivrable à ladite puissance requise,
le bloc électronique de contrôle étant **caractérisé en ce qu'**il est adapté pour, si ladite puissance délivrable est inférieure à ladite puissance requise, déterminer, en fonction d'un gabarit indiquant une puissance maximum appelable par l'engin de traction en fonction de la tension du câble d'alimentation, la valeur de tension du câble d'alimentation correspondant à une puissance maximum appelable égale au maximum à la puissance délivrable ; ledit bloc électronique
de contrôle étant adapté pour commander l'application de ladite valeur de tension déterminée, ou d'une valeur de tension inférieure à ladite valeur de tension déterminée, sur ledit câble d'alimentation par ledit dispositif d'alimentation hybride (6, 7, 13) pour l'alimentation de l'engin de traction par le système d'alimentation hybride.

2. Bloc électronique de contrôle (40) d'un dispositif d'alimentation hybride (6, 7, 13) selon la revendication 1, adapté en outre pour, afin de donner suite audit appel de puissance, la puissance délivrable par le dispositif d'alimentation augmentant, déterminer la puissance délivrable actualisée, pour déterminer, en fonction dudit gabarit, une valeur augmentée de tension, correspondant à une puissance appelable égale au maximum à la puissance délivrable actualisée et pour commander l'application de ladite valeur augmentée de tension sur ledit câble d'alimentation par ledit dispositif d'alimentation hybride.

3. Bloc électronique de contrôle (40) d'un dispositif d'alimentation hybride (6, 7, 13) selon la revendication 1 ou 2, adapté pour commander, au dispositif d'alimentation hybride (6, 7, 13), une augmentation de la puissance délivrée par le dispositif d'alimentation hybride en diminuant la puissance délivrée par le bloc de stockage d'énergie (7) et en augmentant la puissance délivrée par la source primaire (6).

4. Système d'alimentation hybride (4) propre à alimenter un engin de traction et comportant ledit bloc électronique de contrôle selon l'une quelconque des revendications 1 à 3 et le dispositif d'alimentation hybride (6, 7, 13).

5. Système d'alimentation hybride (4) selon la revendication précédente, dans lequel la source primaire d'énergie (6) comprend au moins une pile à combustible et/ou un groupe électrogène et/ou le bloc de stockage d'énergie (7) comprend au moins une batterie et/ou au moins un supercondensateur et/ou un volant d'inertie.

6. Procédé de contrôle d'un dispositif d'alimentation hybride (6, 7, 13) comportant une source primaire d'énergie (6) et un bloc de stockage d'énergie (7) et étant transporté par une plate-forme mobile (10) se déplaçant de façon solidaire avec un engin de traction (1) et alimentant ledit engin de traction pendant ledit déplacement via un câble d'alimentation (3) reliant ledit dispositif d'alimentation et ledit engin de traction, ledit procédé comprenant les étapes suivantes mises en oeuvre par un bloc électronique de contrôle (40) :
en fonction d'un appel de puissance dudit engin de traction sur ledit câble d'alimentation, déterminer la puissance requise par ledit engin de traction à l'instant courant ;
déterminer la puissance délivrable à l'instant courant par la source primaire d'énergie et par le bloc de stockage d'énergie,
comparer la puissance délivrable à ladite puissance requise et, si ladite puissance délivrable est inférieure à ladite puissance requise, déterminer, en fonction d'un gabarit indiquant une puissance maximum appelable par l'engin de traction en fonction de la tension du câble d'alimentation, la valeur de tension du câble d'alimentation correspondant à une puissance maximum appelable égale au maximum à la puissance délivrable ;
commander l'application de ladite valeur de tension déterminée, ou d'une valeur de tension inférieure à ladite valeur de tension déterminée, sur ledit câble d'alimentation par ledit dispositif d'alimentation hybride (6, 7, 13) pour l'alimentation de l'engin de traction par le système d'alimentation hybride.

7. Procédé de contrôle selon la revendication 6, comprenant les étapes suivantes, mises en oeuvre par le bloc électronique de contrôle (40) :
afin de donner suite audit appel de puissance, la puissance délivrable par le dispositif d'alimentation augmentant, détermination de la puissance délivrable actualisée,
détermination, en fonction dudit gabarit, d'une valeur augmentée de tension, correspondant à une puissance appelable égale au maximum à la puissance délivrable actualisée ; et
commande d'appliquer, par ledit dispositif d'alimentation hybride, ladite valeur augmentée de tension sur ledit câble d'alimentation.

8. Procédé de contrôle selon la revendication 6 ou 7, comprenant une étape de commande, par le bloc électronique de contrôle, au dispositif d'alimentation hybride (6, 7, 13), d'une augmentation de la puissance délivrée par le dispositif d'alimentation hybride en diminuant la puissance délivrée par le bloc de stockage d'énergie (7) et en augmentant la puissance délivrée par la source primaire (6).

9. Procédé de contrôle selon l'une des revendications 6 à 8, selon lequel la source primaire d'énergie (6) comprend au moins une pile à combustible et/ou un groupe électrogène et/ou le bloc de stockage d'énergie (7) comprend au moins une batterie et/ou au moins un supercondensateur et/ou un volant d'inertie.

10. Programme d'ordinateur comportant des instructions logicielles qui, lorsqu'elles sont exécutées par un processeur (41), mettent en oeuvre un procédé selon l'une quelconque des revendications 6 à 9.

## Patentansprüche

1. Elektronischer Steuereinheit (40) einer Hybrid-Energieversorgungsvorrichtung (6, 7, 13), die geeignet ist, um eine Zugmaschine zu versorgen, die Hybrid-Energieversorgungsvorrichtung umfassend eine primäre Energiequelle (6) und einen Energiespeicherblock (7) und angepasst ist, um von einer mobilen Plattform (10) transportiert zu werden, die sich fest verbunden mit dem Zugmaschine (1) bewegt, und die Zugmaschine während dieser Bewegung über ein Versorgungskabel (3), das die Energieversorgungsvorrichtung und die Zugmaschine verbindet, zu versorgen, wobei der elektronische Steuerblock angepasst ist, um abhängig von einem Leistungsabruf der Zugmaschine über das Versorgungskabel die von dem Zugmaschine zum aktuellen Zeitpunkt benötigte Leistung zu bestimmen;
wobei der elektronische Steuerblock angepasst ist, um die zum aktuellen Zeitpunkt von der primären Energiequelle und von dem Energiespeicherblock zuführbare Leistung zu bestimmen, um die zuführbare Leistung mit der erforderlichen Leistung zu vergleichen, wobei der elektronische Steuerblock **dadurch gekennzeichnet ist, dass** er angepasst ist, um, wenn die zuführbare Leistung kleiner ist als die erforderliche Leistung, abhängig von einer Schablone, die eine von der Zugmaschine abrufbare Höchstleistung abhängig von der Spannung des Versorgungskabels anzugeben, den Spannungswert des Versorgungskabels zu bestimmen, der einer abrufbaren Höchstleistung entspricht, die höchstens gleich wie die zuführbaren Leistung ist; wobei der elektronische Steuerblock angepasst ist, um die Anwendung des bestimmten Spannungswerts oder eines Spannungswerts, der niedriger ist als der bestimmte Spannungswert, an das Versorgungskabel durch die Hybrid-Stromversorgungsvorrichtung (6, 7, 13) zu steuern, um die Zugmaschine durch das Hybrid-Stromversorgungssystem zu versorgen.

2. Elektronische Steuereinheit (40) einer Hybrid-Stromversorgungsvorrichtung (6, 7, 13) nach Anspruch 1, die ferner angepasst ist, um, um dem Leistungsabruf zu folgen, die von der Stromversorgungsvorrichtung zuführbare Leistung zu erhöhen, die aktualisierte zuführbare Leistung zu bestimmen, um abhängig von der Schablone einen erhöhten Spannungswert zu bestimmen, der einer abrufbaren Leistung entspricht, die höchstens gleich wie die aktualisierte zuführbaren Leistung ist, und um das Anlegen des erhöhten Spannungswerts an das Stromversorgungskabel durch die Hybrid-Stromversorgungsvorrichtung zu steuern.

3. Elektronische Steuereinheit (40) einer Hybrid-Stromversorgungsvorrichtung (6, 7, 13) nach Anspruch 1 oder 2, die angepasst ist, um der Hybrid-Stromversorgungsvorrichtung (6, 7, 13) eine Erhöhung der von der Hybrid-Stromversorgungsvorrichtung zugeführten Leistung zu befehlen, indem die von dem Energiespeicherblock (7) zugeführte Leistung verringert und die von der Primärquelle (6) zugeführte Leistung erhöht wird.

4. Hybrid-Stromversorgungssystem (4), das angepasst ist, um eine Zugmaschine zu versorgen, und das den elektronischen Steuerblock nach einem der Ansprüche 1 bis 3 und die Hybrid-Stromversorgungseinrichtung (6, 7, 13) umfasst.

5. Hybrid-Energieversorgungssystem (4) nach dem vorherigen Anspruch, wobei die primäre Energiequelle (6) mindestens eine Brennstoffzelle und/oder einen Generator umfasst und/oder der Energiespeicherblock (7) mindestens eine Batterie und/oder mindestens einen Superkondensator und/oder ein Schwungrad umfasst.

6. Steuerungsverfahren einer Hybrid-Energieversorgungsvorrichtung (6, 7, 13), umfassend eine primäre Energiequelle (6) und einen Energiespeicherblock (7) und die von einer mobilen Plattform (10) transportiert wird, die sich fest verbunden mit einer Zugmaschine (1) bewegt und die Zugmaschine während der Bewegung über ein Versorgungskabel (3), das die Energieversorgungsvorrichtung und die Zugmaschine verbindet, mit Energie versorgt, wobei das Verfahren die folgenden Schritte umfasst, die von einem elektronischen Steuerblock (40) ausgeführt werden:
abhängig von einer Leistungsanforderung der Zugmaschine an das Versorgungskabel, Bestimmen der von der Zugmaschine zum aktuellen Zeitpunkt benötigte Leistung;
Bestimmen der zum aktuellen Zeitpunkt von der primären Energiequelle und dem Energiespeicherblock zuführbare Leistung,
Vergleichen der zuführbaren Leistung mit der erforderlichen Leistung und, wenn die zuführbare Leistung kleiner ist als die erforderliche Leistung, Bestimmen des Spannungswerts des Versorgungskabels, der einer maximal abrufbaren Leistung entspricht, die höchstens gleich wie die zuführbare Leistung ist, abhängig von einer Schablone, die eine maximal abrufbare Leistung der Zugmaschine abhängig von der Spannung des Versorgungskabels angibt;
Steuern des Anlegens des bestimmten Spannungswerts oder eines Spannungswerts, der niedriger ist als der bestimmte Spannungswert, an das Versorgungskabel durch die Hybrid-Stromversorgungsvorrichtung (6, 7, 13) zur Versorgung der Zugmaschine durch das Hybrid-Stromversorgungssystem.

7. Prüfverfahren nach Anspruch 6, umfassend die folgenden Schritte, die von dem elektronischen Prüfblock (40) implementiert werden:
um dem Leistungsabruf zu folgen, wobei die von der Stromversorgungseinrichtung zuführbare Leistung zunimmt, Bestimmen der aktualisierten zuführbaren Leistung,
Bestimmen, abhängig von der Schablone, eines spannungserhöhten Werts, der einer abrufbaren Leistung entspricht, die höchstens der aktualisierten zuführbaren Leistung entspricht; und
Steuern des Anlegens des erhöhten Spannungswerts an das Stromkabel durch die Hybrid-Stromversorgungsvorrichtung.

8. Steuerverfahren nach Anspruch 6 oder 7, das einen Schritt umfasst, bei dem der elektronische Steuerblock der Hybrid-Stromversorgungsvorrichtung (6, 7, 13) eine Erhöhung der von der Hybrid-Stromversorgungsvorrichtung zugeführten Leistung durch Verringern der von dem Energiespeicherblock (7) zugeführten Leistung und Erhöhen der von der Primärquelle (6) zugeführten Leistung befiehlt.

9. Steuerungsverfahren nach einem der Ansprüche 6 bis 8, wobei die primäre Energiequelle (6) mindestens eine Brennstoffzelle und/oder einen Generator umfasst und/oder der Energiespeicherblock (7) mindestens eine Batterie und/oder mindestens einen Superkondensator und/oder ein Schwungrad umfasst.

10. Computerprogramm, umfassend Softwareanweisungen, die, wenn sie von einem Prozessor (41) ausgeführt werden, ein Verfahren nach einem der Ansprüche 6 bis 9 implementieren.

## Claims

1. Electronic control unit (40) for a hybrid power device (6, 7, 13) for supplying a traction engine, the hybrid power device comprising a primary energy source (6) and an energy storage unit (7) and being adapted to be transported by a mobile platform (10) moving in tandem with said traction engine (1) and to supply said traction engine during said movement via a power cable (3) connecting said power device to said traction engine, said electronic control unit being adapted for, depending on a power request of said traction engine on said power cable, determine the power required by the said traction engine at the current time;
said electronic control unit being adapted to determine the power deliverable at the current time by the primary energy source and by the energy storage unit, to compare the deliverable power to said required power, the electronic control unit being **characterised in that** it is suitable for, if said deliverable power is less than said required power, determine, based on a graph indicating a maximum power requestable by the traction engine according to the voltage of the power cable, the voltage value of the power cable corresponding to a maximum requestable power equal to the deliverable power; said electronic control unit being adapted to control the application of said determined voltage value, or of a voltage value less than said determined voltage value, on said power cable by said hybrid power device (6, 7, 13) for the supply of power to the traction engine by the hybrid power supply system.

2. The electronic control unit (40) for a hybrid power device (6, 7, 13) according to claim 1, furthermore adapted to, in order to respond to the said power request, the power deliverable by the increasing power device, determine the updated deliverable power, to determine, depending on said graph, an increased voltage value, corresponding a requestable power equal to the up to date deliverable power and to control the application of said increased voltage value on said power cable by said hybrid power device.

3. The electronic control unit (40) for a hybrid power device (6, 7, 13) according to claim 1 or 2, adapted to command, to the hybrid power device (6, 7, 13), an increase in the power delivered by the hybrid power device by reducing the power delivered by the energy storage unit (7) and increasing the power delivered by the primary source (6).

4. A hybrid power supply system (4) suitable for powering a traction engine and containing said electronic control unit according to any one of claims 1 to 3 and the hybrid power device (6, 7, 13).

5. The hybrid power supply system (4) according to the preceding claim, in which the primary energy source (6) comprises at least one fuel cell and/or a generator and/or the energy storage unit (7) comprises at least one battery and/or at least one supercapacitor and/or a flywheel.

6. A method for controlling a hybrid power device (6, 7, 13) comprising a primary energy source (6) and an energy storage unit (7) and being transported by a mobile platform (10) moving in tandem with a traction engine (1) and supplying said traction engine during said movement via a power cable (3) connecting said power device to said traction engine, said method comprising the following steps implemented by an electronic control unit (40):
depending on a power request from said traction engine on said power cable,
determine the power required by the said traction engine at the current time;
determine the power deliverable at the current time by the primary energy source and by the energy storage unit,
compare the deliverable power to said requested power and, if said deliverable power is less than said requested power, determine, according to a graph indicating maximum power requestable by the traction engine according to the voltage of the power cable, the voltage value of the power cable corresponding to a maximum requestable power equal to the maximum deliverable power;
control the application of said determined voltage value, or of a voltage value less than said determined voltage value, on said power cable by said hybrid power device (6, 7, 13) for the power supply of the traction engine by the hybrid power supply system.

7. The method for controlling a hybrid power device according to claim 6, comprising the following steps, implemented by the electronic control unit (40):
in order to follow up on said power request, the power deliverable by the power device having increased, determining the updated deliverable power,
determining, depending on said graph, an increased voltage value, corresponding to a requestable power equal to the maximum updated deliverable power; and
commanding the application, by said hybrid power device, of said increased voltage value on said power cable.

8. The control method according to claim 6 or 7, comprising a step of commanding, by the control electronic unit, to the hybrid power device (6, 7, 13), an increase in the power delivered by the hybrid power device by reducing the power delivered by the energy storage unit (7) and increasing the power delivered by the primary source (6).

9. The control method according to one of the claims 6 to 8, wherein the primary energy source (6) comprises at least one fuel cell and/or a generator and/or the energy storage unit (7) comprises at least one battery and/or at least one supercapacitor and/or a flywheel.

10. A computer program comprising software instructions which, when run by a processor (41), implement a method according to any of claims 6 to 9.
